Europäisches Patentamt

European Patent Office

Office européen des brevets

(11) Numéro de publication: **0 533 252 A1**

## DEMANDE DE BREVET EUROPEEN

(21) Numéro de dépôt: **92202756.0**

(22) Date de dépôt: **10.09.92**

(51) Int. Cl.5: **H04N 3/15**

(30) Priorité: **18.09.91 FR 9111503**

(43) Date de publication de la demande:
**24.03.93 Bulletin 93/12**

(84) Etats contractants désignés:
**DE FR GB IT**

(71) Demandeur: **SOCIETE ANONYME D'ETUDES ET REALISATIONS NUCLEAIRES S.O.D.E.R.N.**
**20, Avenue Descartes**
**F-94450 Limeil-Brevannes(FR)**
(84) **FR**

(71) Demandeur: **N.V. Philips'**

**Gloeilampenfabrieken**
**Groenewoudseweg 1**
**NL-5621 BA Eindhoven(NL)**
(84) **DE GB IT**

(72) Inventeur: **Cosnier, Jean-Paul, Société Civile S.P.I.D.**
**156, Boulevard Haussmann**
**F-75008 Paris(FR)**

(74) Mandataire: **Pyronnet, Jacques et al**
**Société Civile S.P.I.D. 156, Boulevard Haussmann**
**F-75008 Paris (FR)**

(54) **Dispositif d'analyse d'image programmable.**

(57) Dispositif d'analyse d'image comportant un dispositif à transfert de charges (T) comprenant une zone image (I) formée d'une matrice photosensible de Y lignes et de X colonnes, une zone mémoire (M) formée d'une matrice mémoire de Y lignes et de X colonnes et d'un registre à décalage (SR) à X positions, ainsi que des premiers moyens décaleurs (ID) pour effectuer un transfert ligne par ligne de la zone image vers la matrice mémoire, des deuxièmes moyens décaleurs (MD) pour effectuer un transfert ligne par ligne de la matrice mémoire vers le registre à décalage et des troisièmes moyens décaleurs (CD) pour effectuer un décalage de colonne du registre à décalage, un séquenceur (SEQ) commandant lesdits premier, deuxième et troisième moyens décaleurs. Le séquenceur (SEQ) comprend un automate de génération de micro-instructions, une micro-instruction présentant au moins un motif élémentaire au moins partiellement paramétrable, les motifs élémentaires étant au moins au nombre de deux à savoir :
- un motif élémentaire de décalage de ligne
- un motif élémentaire de décalage de colonne du registre à décalage.

FIG. 1

La présente invention a pour objet un dispositif d'analyse d'image comportant un dispositif à transfert de charges comprenant une zone image formée d'une matrice photosensible de Y lignes et de X colonnes, une zone de mémoire formée d'une matrice mémoire de Y lignes et de X colonnes et d'un registre à décalage à X positions, ainsi que des premiers moyens décaleurs pour effectuer un transfert ligne par ligne de la zone image vers la matrice mémoire, des deuxièmes moyens décaleurs pour effectuer un transfert ligne par ligne de la matrice mémoire vers le registre à décalage et des troisièmes moyens décaleurs pour effectuer un décalage de colonne du registre à décalage, et un séquenceur commandant les premier, deuxième et troisième moyens décaleurs.

Un tel dispositif est utilisé couramment pour l'analyse des matrices d'image. Il est susceptible d'être utilisé pour des systèmes de guidage.

Certaines applications, tels les viseurs d'étoiles, mettent en oeuvre de tels dispositifs avec une électronique spécifique de chaque application et de chaque type de dispositif à transfert de charges, correspondant aux caractéristiques du satellite particulier sur lequel le ou les viseurs d'étoiles sont embarqués.

La présente invention a pour objet un dispositif de type précité dont l'architecture puisse convenir à un grand nombre d'applications diverses. Dans ce but, un dispositif selon l'invention est caractérisé en ce que le séquenceur comprend un automate de génération de micro-instructions, une micro-instruction présentant au moins un motif élémentaire au moins partiellement paramétrable, les motifs élémentaires étant au moins au nombre de 2, à savoir :

- un motif élémentaire de décalage de ligne,
- un motif élémentaire de décalage de colonne.

Ledit automate présente avantageusement un nombre donné d'états, chaque état conduisant à l'état suivant choisi parmi au moins deux états selon la valeur d'au moins une variable à tester consistant en un paramètre ou en une combinaison logique de paramètres.

De ce fait, l'architecture du dispositif peut rester la même d'une application à l'autre, en modifiant l'automate qui est défini par des données stockables dans une mémoire appropriée. Pour l'analyse d'image les micro-instructions déterminent des séquences de motifs élémentaires dont chacun est paramétrable, et l'enchaînement des micro-instructions est déterminé par l'automate. Selon une variante avantageuse, chaque micro-instruction comporte une pluralité d'états logiques déterminant au moins une configuration d'horloge de transfert d'information pour déterminer s'il y a ou non transfert d'information lors de l'exécution du motif élémentaire correspondant, et éventuellement une configuration d'horloge de lecture pour déterminer s'il y a ou non présence de signal vidéo utile.

Les fonctions d'acquisition et de transfert de données sont ainsi assurées en fonction des états logiques (transfert de données mémorisées = vidage de la zone image vers la zone mémoire ; transfert de données mémorisées et lecture = transfert de la zone mémoire vers le registre à décalage pour le motif élémentaire de décalage de ligne et sortie du signal à partir du registre à décalage pour le motif élémentaire de décalage de colonne ; absence à la fois de transfert de données mémorisées et de lecture = vidage de la zone mémoire).

Une première micro-instruction peut consister en la répétition n fois d'une première séquence de motifs élémentaires. Une deuxième micro-instruction peut consister en la répétition de ladite première séquence de motifs élémentaires pendant un temps d'intégration. Une troisième micro-instruction peut consister en la répétition n fois d'une deuxième séquence de micro-instructions comprise entre deux micro-instructions données. Une quatrième et une cinquième micro-instructions peuvent consister en la répétition jusqu'à expiration respectivement d'un temps d'intégration et d'une période d'intégration d'une troisième et d'une quatrième séquences de micro-instructions comprises entre deux micro-instructions.

Lorsqu'un motif élémentaire est un motif de décalage de ligne, ledit paramètre peut être représentatif du numéro d'une ligne ; lorsqu'un motif élémentaire est un motif de décalage de colonne, ledit paramètre peut être représentatif du numéro d'une colonne.

Selon un mode de réalisation préféré permettant l'analyse d'une ou plusieurs parties sélectionnées d'une image, le dispositif comporte un premier type de motif élémentaire de décalage de colonne correspondant à un décalage à fréquence élevée et un deuxième type de motif élémentaire de décalage colonne correspondant à un décalage à fréquence dite lente pour produire un signal vidéo. Ceci permet d'accélérer l'acquisition des données en limitant la production d'un signal vidéo et l'acquisition de données aux régions intéressantes de l'image.

Un premier type de séquence de micro-instructions peut comporter une séquence d'acquisition d'une sous-zone d'image, comprenant successivement un motif élémentaire de décalage de ligne, un premier type de motif de décalage de colonne, un deuxième type de motif de décalage de colonne et de nouveau un premier type de motif de décalage de colonne. Cette micro-instruction permet directement, en choisissant les paramètres, d'acquérir les données relatives à une partie seulement d'une ligne.

Un deuxième type de séquence de micro-instructions peut comporter une séquence de motifs élémentaires de lecture rapide comprenant successivement une première boucle de répétition comprenant un motif de décalage de n lignes, et un premier type de décalage de colonne, et une deuxième boucle de répétition comprenant un motif de décalage d'un nombre restant de lignes et un premier type de décalage de colonne.

L'invention sera mieux comprise à la lecture de la description qui va suivre donnée à titre d'exemple non limitatif, en liaison avec les dessins qui représentent :

- la figure 1, un synoptique d'un dispositif d'analyse d'image,
- les figures 2a et 2b, des exemples de signaux générés respectivement dans le cas d'un motif de décalage de ligne et d'un motif de décalage de colonne,
- la figure 3, un exemple d'architecture du séquenceur,
- la figure 4, un exemple de synoptique d'un automate de générateur de micro-instructions,
- la figure 5, un exemple d'image présentant quatre sous-zones à acquérir.

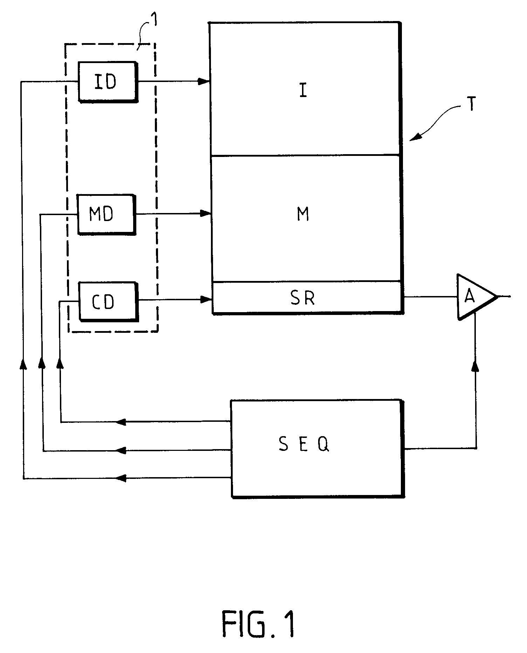

Selon la figure 1, un dispositif à transfert de charges, désigné par le repère général T, comporte une zone image I formée d'une matrice photosensible de Y lignes et de X colonnes, une zone de mémoire M formée d'une matrice mémoire de Y lignes et de X colonnes, et d'un registre à décalage SR à X positions. Un séquenceur SEQ produit des signaux de commande pour un décaleur de ligne image ID, un décaleur de ligne mémoire MD, et un décaleur de colonne CD dont les sorties produisent des signaux de décalage pour respectivement la zone image I, la zone mémoire M et le registre à décalage SR. Le séquenceur SEQ peut produire également un signal de commande de gain pour un amplificateur A recevant à son entrée les signaux issus du registre à décalage SR.

Selon l'invention, les divers moyens décaleurs ID, MD et CD ne sont plus indépendants les uns des autres, mais font au contraire partie d'un même sous-ensemble 1 représenté en pointillé à la figure 1 de manière à produire les signaux de décalage à partir d'un motif de décalage de ligne et d'un motif de décalage colonne paramétrables. Ceci permet de rendre l'architecture du dispositif adaptable à de nombreuses situations simplement en modifiant la valeur des paramètres, et éventuellement celle d'états logiques prédéterminés.

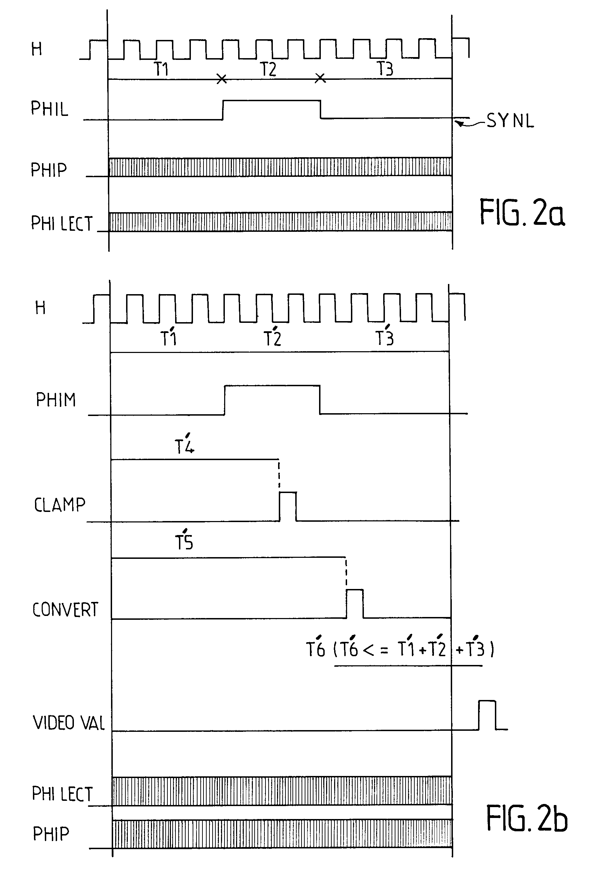

La figure 2a correspond aux signaux générés par les moyens décaleurs ID ou MD pour produire un décalage de ligne. Le motif ligne PHIL présente un temps égal à la somme de trois temps élémentaires $T_1$, $T_2$ et $T_3$ paramétrables. Le temps $T_1$ définit les transitions de l'horlogne ligne H, le temps $T_2$, la période du motif, et le temps $T_3$ l'instant de génération de l'information SYNL de synchronisation de ligne.

La figure 2b correspond aux signaux générés par les moyens décaleurs CD pour produire un décalage de colonne. Les paramètres de définition du motif colonne sont les temps $T'_1$, $T'_2$ et $T'_3$ définissant respectivement les transitions de l'horloge colonne H', la période du motif, et l'instant de génération de l'information SYNC de synchronisation de colonne. Sont également paramétrables l'instant $T'_4$ de génération du signal LCL d'alignement de niveau ("CLAMP"), l'instant $T'_5$ de génération d'un signal CONVERT d'autorisation de conversion analogique-numérique et le temps $T'_6$ - (compté à partir de $T'_5$) de génération d'un signal VIDEO VAL de validité vidéo. Certains de ces paramètres ne dépendent que du type de matrice employé et de la fréquence d'utilisation. Ils peuvent être figés dans une mémoire PROM externe au séquenceur. On peut ainsi prédéfinir deux motifs de type colonne dénommés COLONNE 1 et COLONNE 2 qui correspondent au séquencement en fonction du mode de lecture respectivement rapide ou lent.

Les paramètres figés sont alors :

- les temps $T'_1$ à $T'_6$ (si un de ces temps est nul, le signal correspondant est invalidé),
- l'état logique de l'horloge colonne H' au début du motif,
- la validation des signaux LCL, CONV et VAL. Ces signaux sont validés pour le motif élémentaire COLONNE 2 et invalidés pour le motif élémentaire COLONNE 1.

De la même façon, on peut prédéfinir deux motifs de décalage de ligne, à savoir LIGNE 1 et LIGNE 2 respectivement pour une lecture rapide ou lente. Il serait également possible de définir des motifs de ligne adaptés soit au transfert de la zone image dans la zone mémoire, soit au transfert de la zone mémoire au registre à décalage.

Cependant, selon l'invention, il est considéré comme avantageux d'utiliser à cet effet des états logiques qui restent eux paramétrables en cours de fonctionnement pour chaque motif. Ces états logiques sont : une commande de lecture $\phi_l$ - (PHILECT) indiquant si la ligne correspondant présente ou non un signal vidéo utile, le signal $\phi_l$ étant exploitable en aval par l'électronique de traitement et de mémorisation de l'image, et une commande $\phi_P$ (PHIP) de blocage de zone image.

Lorsque $\phi_P$ n'est pas activé ($\phi_P$ = 0), l'horloge de la zone image est bloquée (par exemple porte ET) pour bloquer le transfert.

Lorsque $\phi_P$ est activé ($\phi_P$ = 1), il y a validation d'un transfert de données avec écriture dans la zone mémoire ou le registre à décalage. Ceci permet donc d'utiliser le même motif ligne pour commander la zone image et la zone mémoire.

Si par exemple $\phi_P$ est activé ($\phi_P = 1$) et $\phi_I$ est activé ($\phi_I = 1$), on a un transfert de la zone mémoire vers le registre à décalage pour le motif élémentaire de décalage de ligne et sortie du signal à partir du registre à décalage pour le motif élémentaire de décalage de colonne. Ceci correspond à une opération combinée de lecture et d'écriture d'un signal vidéo utile.

Lorsque $\phi_I = 0$, la ligne correspondante $A_I$ ne présente pas de signal vidéo utile. Le vidage des données peut être alors accéléré en inhibant la génération des signaux de traitement de données.

Un paramètre supplémentaire peut être la valeur G du gain de l'amplificateur A de signal vidéo ($G = G_1$, $G_2$, $G_3$ ou $G_4$ par exemple).

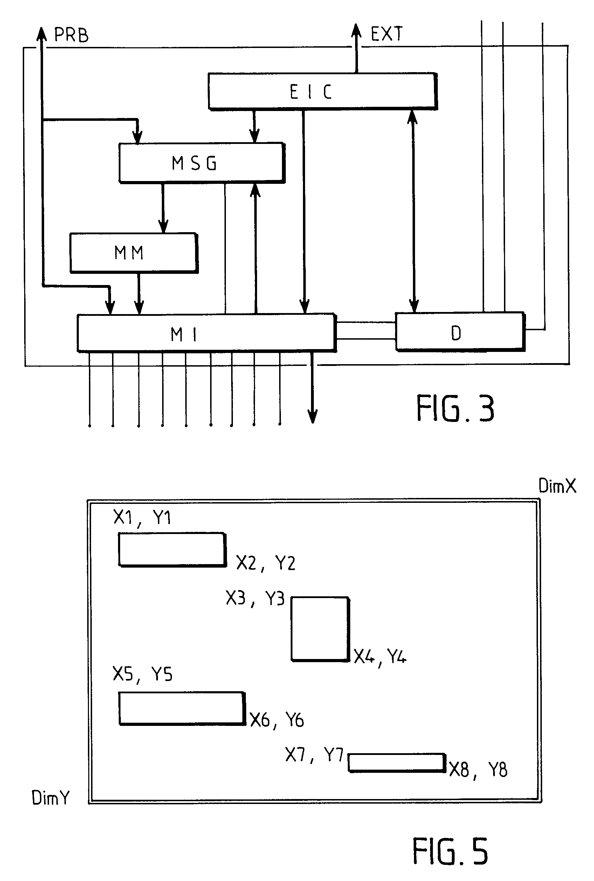

La figure 3 représente une architecture de séquenceur. Un bus externe EXT fournit les instructions de commande de séquenceur. Un bus externe PRB permet le dialogue avec une mémoire PROM dans laquelle sont mémorisées des caractéristiques de séquenceur (voir plus haut). Un générateur de séquentiel de micro-instructions MSG reçoit des commandes d'un contrôleur d'interface externe EIC qui répartit les informations et instructions reçues du bus EXT. La fonction de générateur de signaux de décalage (cf. figure 1, rep. 1, ID, MD et CD) est réalisée par un interpréteur de micro-instructions MI qui reçoit ses instructions du générateur de séquentiel MSG, à travers une mémoire de micro-instructions MM (mémoire tampon) ainsi qu'un signal d'activation directement à partir du générateur de séquentiel MSG. Le contrôleur d'interface externe EIC fournit des paramètres directement à l'interpréteur de micro-instructions MI. Enfin, un circuit de datation D reçoit des informations de références temporelles à partir du contrôleur d'interface externe EIC.

Le contrôleur d'interface externe EIC mémorise dans des registres les paramètres de fonctionnement du séquenceur fournis par la fonction de gestion afin de mettre ces informations à la disposition des autres sous-ensembles.

Le circuit de datation D comporte un générateur de date comportant un compteur seize bits qui permet de mesurer le temps écoulé par rapport à une horloge locale et des registres de seize bits permettant de mémoriser les dates liées aux évènements tels que fin d'intégration, fin de période, etc... Ces registres sont adressables en lecture par le contrôleur d'interface externe EIC.

Le générateur de séquentiel de micro-instructions MSG comporte un automate de génération, et un circuit de calcul pour la détermination des paramètres.

L'algorithme de génération peut être synthétisé par un automate matérialisant une machine formelle de MOORE. Afin que le circuit séquenceur soit flexible, le graphe de cet automate est décrit dans une mémoire programmable, chaque état étant défini par un mot. Pour que la description reste simple, la contrainte apportée à l'automate est de ne tester à chaque état qu'une seule variable ou combinaison de variables pour activer une transition. Chaque état a ainsi au maximum deux états successeurs (par exemple soit lui-même en cas de répétition d'un motif élémentaire, soit l'état suivant).

Un état est défini par un mot de 48 bits (soit 6 octets) identifié par son adresse en mémoire PROM et constitué :

- d'un premier champ de 4 bits spécifiant le numéro de la variable d'entrée à tester,
- d'un deuxième champ de 10 bits qui définit l'état suivant si le test de la variable d'entrée vaut 0,
- d'un troisième champ de 10 bits qui définit l'état suivant si le test de la variable d'entrée vaut 1,
- d'un quatrième champ de 24 bits qui définit les valeurs que prennent les sorties de l'automate pendant l'état.

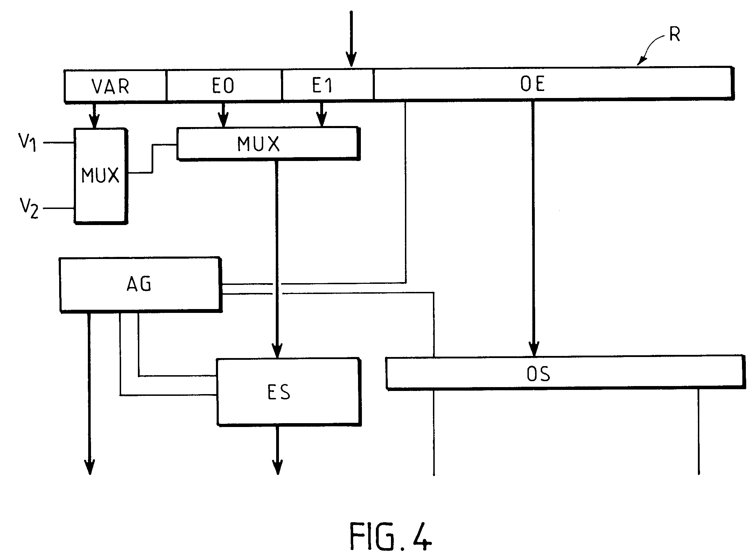

Le synoptique de l'automate de génération est représenté à la figure 4.

L'automate de génération comporte un registre d'état R comportant un secteur VAR (4 bits) pour le numéro de la variable d'entrée à tester, un secteur E0 (10 bits) pour l'état suivant si le test de la variable d'entrée vaut zéro, un secteur E1 (10 bits) pour l'état suivant si le test de la variable d'entrée vaut 1, et un secteur OE pour les valeurs que prennent les sorties de l'automate pendant l'état.

Les variables d'entrées sont introduites dans un multiplexeur MUX1 qui reçoit également la sortie du secteur VAR. La sortie du multiplexeur MUX1 introduit le résultat du test dans un multiplexeur MUX2 qui reçoit les sorties des secteurs E0 et E1. L'adresse de l'état suivant est en conséquence mémorisée dans un registre ES qui va chercher son adresse dans la mémoire PROM. La sortie du secteur DE est introduite dans un circuit OS qui produit les variables de sortie de l'automate.

Un gestionnaire d'automate AG contrôle le déroulement des instructions entre le registre T, le registre ES et le circuit OS.

La mémoire de micro-instructions MM sert de tampon entre le générateur MSG et l'interpréteur MI, la priorité étant accordée à ce dernier. Elle permet, entre autres, de mémoriser les instructions comprises entre deux instructions de répétition.

L'interpréteur MI récupère les micro-instructions dans la mémoire pour synthétiser les signaux de séquencement du dispositif à transfert de charges T.

Un double étage de registres permet le "pipeline" des micro-instructions. Cette gestion est assurée par la fonction "gestion accès mémoire de micro-instructions", qui traite également les instructions de répétition de séquence.

Les autres micro-instructions sont interprétées par un automate de synthèse de signaux qui génère les sorties en fonction :

- des paramètres de la micro-instruction (compteurs n de répétition du motif élémentaire, états logiques des sorties associées, valeur du gain),
- des paramètres des motifs, lus en mémoire programmable PROM à la remise en l' état ("RESET"). Les paramètres t1 à t6 sont prétraités par l'intermédiaire d'une batterie de registres/décompteurs,
- des paramètres fournis par l'interface externe (les temps Ti et Tp) qui sont eux aussi prétraités par l'intermédiaire de décompteurs.

Le séquentiel de micro-instructions (voir figure 5) permet de séquencer l'intégration en mode non jointif puis la lecture de la zone mémoire d'une matrice DTC de taille (DimX, DimY) pixels (soit Dim Y lignes et DIM X colonnes) et pour laquelle ont été spécifiées quatre sous-zones d'acquisitions définies par les coordonnées des pixels extrêmes [X1, Y1), (X2, Y2)], [X3, Y3), (X4, Y4)], [(X5, Y5), (X6, Y6)], [(X7, Y7), (X8, Y8)]. En-dehors de ces zones, la lecture s'effectue par paquets de n lignes et en acccélérant le vidage du registre de sortie.

L'automate de génération pilote le circuit de calcul de manière à déterminer les paramètres des micro-instructions :

n1 = int (Y1 /n)      , n2 = (Y1 - n1 / n)
n3 = X1      , n4 = X2 - X1
n5 = Dimx - X2      , n6 = Y2 - Y1
n7 = int [(Y3 - Y2)/n]      , n8 = (Y3 - Y2) - (n7 / n)
n9 = X3      , n10 = X4 - X3
n11 = Dim X - X4      , n12 = Y4, Y3
n13 = int [(Y5 - Y4)/n]      , n14 = (Y5 - Y4) - (n13 / n)
n15 = X5      , n16 = X6 - X5
n17 = Dim X - X6      , n18 = Y6 - Y5
n19 = int [(Y7 - Y6)/n]      , n10 = (Y7 - Y6) - (n19 / n)
n21 = X7      , n22 = X8 - X7
n23 = DimX - X8      , n24 = Y8 - Y7
n25 = int [(DimY - Y8)/n]      , n26 = DimY - (n / n25).

int(x) désignant la fonction "partie entière de x".

En ayant défini en PROM les motifs :
- LIGNE 1 :

signaux pour le décalage d'une ligne,
-COLONNE 1 :
signaux pour le décalage à fréquence élevée du registre de sortie (avec invalidation des signaux CLAMP, CONVERT, VIDEO-VALIDE),
-COLONNE 2 :
signaux pour le décalage à fréquence lente du registre de sortie (avec validation des signaux CLAMP, CONVERT, VIDEO-VALIDE).

Le séquencement du DTC correspond à l'exécution des micro-instructions générées par l'automate en mémoire programmable PROM qui sont :
Lancement compteur période :
DEBUT TP.
Vidage rapide de la zone image dans la zone mémoire :
REP LIGNE1 [DimY], $\phi p = 1$, $\phi 1 = 0$, E = 0, G = G1
REP COLONNE1 [DimX], $\phi p = 1$, $\phi 1 = 0$, E = 0, G = G1.
Lancement compteur intégration :
DEBUT TI.
Pendant le temps d'intégration T1, vidage par paquets de n lignes de la zone mémoire (on répète l'enchaînement des motifs LIGNE 1 (n fois) et COLONNE 1 (Dim X fois) pendant le temps d'intégration TI) :
REP TI
REP LIGNE1 [n], $\phi p = 0$, $\phi l = 0$, E = 0, G = G1
REP COLONNE1 [DimX], $\phi p = O$, $\phi l = 0$, E = 0, G = G1.
FIN REP
Vidage rapide de la zone image dans la zone mémoire :
REP LIGNE1 [DimY], $\phi p = 1$, $\phi l = 0$, E = 0, G = G1
REP COLONNE1 [DimX], $\phi p = 1$, $\phi l = 0$, E = 0, G = G1.
Lecture rapide jusqu'à la première sous-zone (n1 paquets de n lignes) :
REP [n1]
REP LIGNE1 [n], $\phi p = 1$, $\phi l = 1$, E = 0, G = G1
REP COLONNE1 [DimX], $\phi p = 1$, $\phi l = 1$, E = 0, G = G1
FIN REP.
REP LIGNE1 [n2], $\phi p = 1$, $\phi l = 1$, E = 0, G = G1
REP COLONNE1 [DimX], $\phi p = 1$, $\phi l = 1$, E = 0, G = G1.
Acquisition de la première sous-zone :
REP [n6]
REP LIGNE1 [1], $\phi p = 1$, $\phi l = 1$, E = 0, G = G1
REP COLONNE1 [n3], $\phi p = 1$, $\phi l = 1$, E = 0, G = G1
REP COLONNE2 [n4], $\phi p = 1$, $\phi l = 1$, E = 0, G = G1
REP COLONNE1 [n5], $\phi p = 1$, $\phi l = 1$, E = 0, G = G1
FIN REP.
Lecture rapide jusqu'à la deuxième sous-zone :
REP [n7]
REP LIGNE1 [n], $\phi p = 1$, $\phi l = 1$, E = 0, G = G2
REP COLONNE1 [DimX], $\phi p = 1$, $\phi l = 1$, E = 0 G = G2

FIN REP

REP LIGNE1 [n8], $\phi p = 1$, $\phi l = 1$, E = 0, G = G2

REP COLONNE1 [DimX], $\phi p = 1$, $\phi l = 1$, E = 0, G = G2.

Acquisition de la deuxième sous-zone :

REP [n12]

REP LIGNE1 [1], $\phi p = 1$, $\phi l = 1$, E = 0, G = G2

REP COLONNE1 [9], $\phi p = 1$, $\phi l = 1$, E = 0, G = G2

REP COLONNE2 [10], $\phi p = 1$, $\phi l = 1$, E = 0, G = G2

REP COLONNE1 [11], $\phi p = 1$, $\phi l = 1$, E = 0, G = G2

FIN REP.

Lecture rapide jusqu'à la troisième sous-zone :

REP [n13]

REP LIGNE1 [n], $\phi p = 1$, $\phi l = 1$, E = 0, G = G3

REP COLONNE1 [DimX], $\phi p = 1$, $\phi l = 1$, E = 0, G = G3

FIN REP

REP LIGNE1 [n14], $\phi p = 1$, $\phi l = 1$, E = 0, G = G3

REP COLONNE1 [DimX], $\phi p = 1$, $\phi l = 1$, E = 0, G = G3.

Acquisition de la troisième sous-zone :

REP [n18]

REP LIGNE1 [1], $\phi p = 1$, $\phi l = 1$, E = 0, G = G3

REP COLONNE1 [n15], $\phi p = 1$, $\phi l = 1$, E = 0, G = G3

REP COLONNE2 [n16], $\phi p = 1$, $\phi l = 1$, E = 0, G = G3

REP COLONNE1 [n17], $\phi p = 1$, $\phi l = 1$, E = 0, G = G3

FIN REP.

Lecture rapide jusqu'à la quatrième sous-zone :

REP [n19]

REP LIGNE1 [n], $\phi p = 1$, $\phi l = 1$, E = 0, G = G4

REP COLONNE1 [DimX], $\phi p = 1$, $\phi l = 1$, E = 0, G = G4

FIN REP

REP LIGNE1 [n2O], $\phi p = 1$, $\phi l = 1$, E = 0, G = G4

REP COLONNE1 [DimX], $\phi p = 1$, $\phi l = 1$, E = 0, G = G4.

Lecture rapide jusqu'à la quatrième sous-zone :

REP [n24]

REP LIGNE1 [1], $\phi p = 1$, $\phi l = 1$, E = 0, G = G4

REP COLONNE1 [n21], $\phi p = 1$, $\phi l = 1$, E = 0, G = G4

REP COLONNE2 [n22], $\phi p = 1$, $\phi l = 1$, E = 0, G = G4

REP COLONNE1 [n23], $\phi p = 1$, $\phi l = 1$, E = 0, G = G4

FIN REP.

Lecture rapide jusqu'à la fin de la matrice :

REP [n25]

REP LIGNE1 [n], $\phi p = 1$, $\phi l = 1$, E = 0, G = G4

REP COLONNE1 [DimX], $\phi p = 1$, $\phi l = 1$, E = 0, G = G4

FIN REP

REP LIGNE1 [n26], $\phi p = 1$, $\phi l = 1$, E = 0, G = G4

REP COLONNE1 [DimX], $\phi p = 1$, $\phi l = 1$, E = 0, G = G4.

Pendant tout le reste de la période, vidage rapide des zones image et mémoire :

REP-TP

REP LIGNE1 [n], $\phi p = 1$, $\phi l = 0$, E = 0, G = G4

REP COLONNE1 [DimX], $\phi p = 1$, $\phi l = 0$, E = 0, G = G4.

## Revendications

1. Dispositif d'analyse d'image comportant un dispositif à transfert de charges comprenant une zone image formée d'une matrice photosensible de Y lignes et de X colonnes, une zone mémoire formée d'une matrice mémoire de Y lignes et de X colonnes et d'un registre à décalage à X positions, ainsi que des premiers moyens décaleurs pour effectuer un transfert ligne par ligne de la zone image vers la matrice mémoire, des deuxièmes moyens décaleurs pour effectuer un transfert ligne par ligne de la matrice mémoire vers le registre à décalage et des troisièmes moyens décaleurs pour effectuer un décalage de colonne du registre à décalage, un séquenceur commandant lesdits premier, deuxième et troisième moyens décaleurs, caractérisé en ce que le séquenceur comprend un automate de génération de micro-instructions, une micro-instruction présentant au moins un motif élémentaire au moins partiellement paramétrable, les motifs élémentaires étant au moins au nombre de deux à savoir :
   - un motif élémentaire de décalage de ligne
   - un motif élémentaire de décalage de colonne du registre à décalage.

2. Dispositif selon la revendication 1 caractérisé en ce que ledit automate présente un nombre donné d'états, chaque état conduisant à un état suivant choisi parmi au moins deux états selon la valeur d'au moins une variable à tester consistant en un paramètre logique ou en une combinaison de paramètres logiques.

3. Dispositif selon l'une des revendications 1 ou 2 caractérisé en ce que chaque motif élémentaire comporte une pluralité d'états logiques déterminant au moins une configuration d'horloge de transfert d'information pour déterminer s'il y a ou non transfert d'information lors de l'exécution du motif élémentaire correspondant.

4. Dispositif selon la revendication 3 caractérisé en ce qu'il comporte également une configuration d'horloge de lecture pour déterminer s'il y a ou non présence de signal vidéo utile.

5. Dispositif selon une des revendications 1 à 4 caractérisé en ce qu'il comporte une instruction de répétition d'une séquence de micro-instructions.

**6.** Dispositif selon une des revendications précédentes caractérisé en ce qu'il comporte au moins une micro-instruction d'initialisation.

**7.** Dispositif selon une des revendications précédentes caractérisé en ce qu'il comporte une première micro-instruction consistant en la répétition n fois d'une première séquence de motifs élémentaires.

**8.** Dispositif selon une des revendications précédentes caractérisé en ce qu'il comporte une deuxième micro-instruction consistant en la répétition d'une deuxième séquence de motifs élémentaires pendant un temps d' intégration $(T_i)$.

**9.** Dispositif selon une des revendications précédentes caractérisé en ce qu'il comporte une troisième micro-instruction de répétition d'une troisième séquence de motifs élémentaires comprise entre deux micro-instructions données.

**10.** Dispositif selon une des revendications précédentes caractérisé en ce qu'il comporte une quatrième micro-instruction de répétition jusqu'à expiration du temps d'intégration $(T_i)$ d'une quatrième séquence de motifs élémentaires comprise entre deux micro-instructions données.

**11.** Dispositif selon une des revendications précédentes caractérisé en ce qu'il comporte une cinquième micro-instruction de répétition jusqu'à expiration d'une période $(T_p)$ d'une troisième séquence de motifs élémentaires comprise entre deux micro-instructions données.

**12.** Dispositif selon une des revendications précédentes caractérisé en ce qu'un motif élémentaire de décalage de ligne présente un paramètre représentatif du numéro d'une ligne.

**13.** Dispositif selon une des revendications précédentes caractérisé en ce qu'un motif élémentaire de décalage de colonne présente un paramètre représentatif du numéro d'une colonne.

**14.** Dispositif selon une des revendications précédentes caractérisé en ce qu'il comporte un premier type de motif élémentaire de décalage de colonne correspondant à un décalage à fréquence élevée et un deuxième type de motif élémentaire de décalage de colonne correspondant à un décalage à fréquence dite lente pour produire un signal vidéo.

**15.** Dispositif selon la revendication 14 caractérisé en ce qu'un premier type de séquence de micro-instructions comporte une séquence d'acquisition d'une sous-zone d'image, comprenant successivement un motif élémentaire de décalage de ligne, un premier type de motif élémentaire de décalage de colonne, un deuxième type de motif élémentaire de décalage de colonne et de nouveau un premier type de décalage de colonne.

**16.** Dispositif selon une des revendications 14 ou 15 caractérisé en ce qu'un deuxième type de séquence de micro-instructions comporte une séquence de motifs élémentaires de lecture rapide comprenant successivement une première boucle de répétition comprenant un motif de décalage de n lignes et un premier type de motif de décalage de colonne, et une deuxième boucle de répétition comprenant un motif de décalage d'un nombre restant de lignes et un premier type de motif de décalage de colonne.

FIG. 1

FIG.2a

FIG.2b

FIG. 3

FIG. 5

FIG.4

EP 0 533 252 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 265 302 (THOMSON-CSF)<br>* colonne 3, ligne 58 - colonne 4, ligne 12 *<br>* colonne 4, ligne 57 - colonne 5, ligne 17; figures 1,6 * | 1,14,15 | H04N3/15 |
| A | --- | 5,7 | |
| X | EP-A-0 236 157 (THOMSON-CSF)<br>* colonne 6, ligne 27 - colonne 7, ligne 5 *<br>* colonne 8, ligne 49 - colonne 9, ligne 8; figure 7 * | 1,14,15 | |
| A | --- | 5,7 | |
| X | DE-A-3 744 128 (HEERING W ET AL.)<br>* colonne 1, ligne 11 - ligne 50 *<br>--- | 1,14,15 | |
| A | US-A-4 430 673 (SALOMON ET AL.)<br>* colonne 2, ligne 61 - colonne 3, ligne 30; figure 1 *<br>--- | 1 | |
| A | EP-A-0 178 954 (S.F.I.M)<br>* page 5, ligne 6 - page 6, ligne 22 *<br>* page 7, ligne 4 - ligne 11; figure 1 *<br><br>----- | 1 | DOMAINES TECHNIQUES RECHERCHES (Int. Cl.5)<br><br>H04N |

**Le présent rapport a été établi pour toutes les revendications**

| Lieu de la recherche | Date d'achèvement de la recherche | Examinateur |
|---|---|---|
| LA HAYE | 27 NOVEMBRE 1992 | BEQUET T.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

............................................................

& : membre de la même famille, document correspondant